# EUROPEAN PATENT APPLICATION

(11) **EP 2 124 096 A1**
(43) Date of publication of application: **25.11.2009**
(21) Application number: 07831916.7
(22) Date of filing: 15.11.2007
(51) Int. Cl.: G02F 1/1343, G02F 1/1335

(54) **LIQUID CRYSTAL DISPLAY DEVICE, AND ITS MANUFACTURING METHOD**

(30) Priority: 15.03.2007 JP 2007067036
(71) Applicant: Sharp Kabushiki Kaisha, Osaka-shi Osaka 545-8522 (JP)
(72) Inventor: FUJITA, Tetsuo, Osaka-shi, Osaka 545-8522 (JP); HARADA, Mitsunori, Osaka-shi, Osaka 545-8522 (JP); NAKAHARA, Hijiri, Osaka-shi, Osaka 545-8522 (JP); NAKATA, Yukinobu, Osaka-shi, Osaka 545-8522 (JP); KOKURA, Masafumi, Osaka-shi, Osaka 545-8522 (JP)
(74) Representative: Müller - Hoffmann & Partner
(86) International application number: PCT/JP2007/072186
(87) International publication number: WO 2008/111259

(57) **Abstract**

The present invention provides a semi-transmissive liquid crystal display device that can suppress flicker by adjusting an optimum value of a direct-current offset voltage that is applied to offset a bias electric field generated inside liquid crystal without increasing the number of production steps, and also provides a preferable production method of the semi-transmissive liquid crystal display device. The liquid crystal display device of the present invention is a semi-transmissive liquid crystal display device including: a substrate on a back face side, including a transmissive electrode and a reflective electrode; a substrate on an observation face side, facing the substrate on the back face side; and a liquid crystal layer arranged between the substrate on the back face side and the substrate on the observation face side, wherein the reflective electrode has a molybdenum-containing surface on a side of the liquid crystal layer.

## Description

### TECHNICAL FIELD

The present invention relates to a liquid crystal display device and a production method thereof. More particularly, the present invention relates to a semi-transmissive liquid crystal display device that is preferably used in mobile devices that need a reduction in power consumption, such as a cellular phone, and to a production method of such a semi-transmissive liquid crystal display device.

### BACKGROUND ART

A semi-transmissive liquid crystal display device, which is one kind of a liquid crystal display device, has a function of displaying images in both of transmissive mode and reflection mode. That is, the semi-transmissive liquid crystal display device exhibits characteristics of a transmissive liquid crystal display device, for example, exhibits high visibility even in a dark environment because it includes a backlight, and further exhibits characteristics of a reflective liquid crystal display device such as a low power-consumption because it uses external light for display.

According to this semi-transmissive liquid crystal display device, each pixel, which is the minimum unit for displaying an image, has a reflective region and a transmissive region. In the reflective region, an electrode with a high reflectance (hereinafter, also referred to as a "reflective electrode") is arranged. In the transmissive region, an electrode with a high transmittance (hereinafter, also referred to as a "transmissive electrode") is arranged. The transmissive electrode and the reflective electrode have different electrical properties because they are made of different metal materials. Due to this, the transmissive region and the reflective region are different in an optimum value of a direct-current offset voltage that is applied to offset a bias electric field generated inside liquid crystal. However, only one direct-current offset voltage can be set for one pixel. Accordingly, a direct-current offset voltage optimum for either the transmissive region or the reflective region is applied to the both regions, and so flicker and the like is generated, possibly resulting in a reduction in display qualities. In such a point, there is room for improvement. In addition, a direct-current voltage is applied to liquid crystals in either the transmissive region or the reflective region for a long time. So, the reliability of the liquid crystal might be reduced. Also in such a point, there is room for improvement. The flicker is a phenomenon in which the entire or part of a screenblinks, and more specifically, flicker or fluctuation is observed in a screen if a period of time when a luminance of the screen is changed is longer than a period of time when an afterimage is perceived.

In order to eliminate display defects generated due to the difference in electrical property between the transmissive electrode and the reflective electrode, electric potentials of the transmissive electrode and the reflective electrode are equalized by adjusting work functions of the transmissive electrode and the reflective electrode to almost the same value, for example. Specifically, the following technology is disclosed: a transparent conductive film having a work function equivalent to that of a material for a transmissive electrode is stacked on a surface of a reflective electrode, thereby enabling the surface of the reflective electrode and the surface of the transmissive electrode to have almost the same work function.

If the transmissive electrode is an ITO (indium tin oxide) film and the reflective electrode is an A1 (aluminum) film, for example, a configuration in which an ITO film is formed as a transparent conductive filmarranged on the reflective electrode surface is mentioned. However, if such a reflective electrode in a pixel composed of the Al film and the ITO film that are in contact with each other is subjected to a patterning step and the like, Al is reacted with ITO and electrolytic corrosion, occurs and as a result, the ITO film might be eliminated.

Further, a method in which an IZO (registered trademark) (indium zinc oxide) film having almost the same work function as that of an ITO film is formed on a surface of a reflective electrode is disclosed. For example, a method that includes at least two etching steps of performing an etching treatment using different etching solutions, including an etching step of etching only the IZO film positioned above an Al film (for example, refer to Patent Document 1). In this case, no electrolytic corrosion between Al and IZO is generated, and so the IZO film is not eliminated.

The IZO film on the A1 film is subj ected to a plasma treatment in a fluorine-containing gas atmosphere, and thereby, the IZO film is easily etched, and then, the IZO film and the Al film, which is a multi-layer film, are successively etched (refer to Patent Document 2, for example).

The following method is disclosed as a method of suppressing the flicker without increase in the number of production steps. A transmissive electrode is formed over the entire surface of each pixel arranged in a substrate on a back face side, and thereby a transparent conductive film in a transmissive region and a transparent conductive film that is formed on a reflective electrode in a reflective region in order to suppress flicker are formed (for example, refer to Patent Documents 3 and 4).
[Patent Document 1]
   Japanese Kokai Publication No. 2005-316399
[Patent Document 2]
   Japanese Kokai Publication No. 2004-191958
[Patent Document 3]
   Japanese Kokai Publication No. 2004-109797
[Patent Document 4]
   Japanese Kokai Publication No. 2004-46223

### DISCLOSURE OF INVENTION

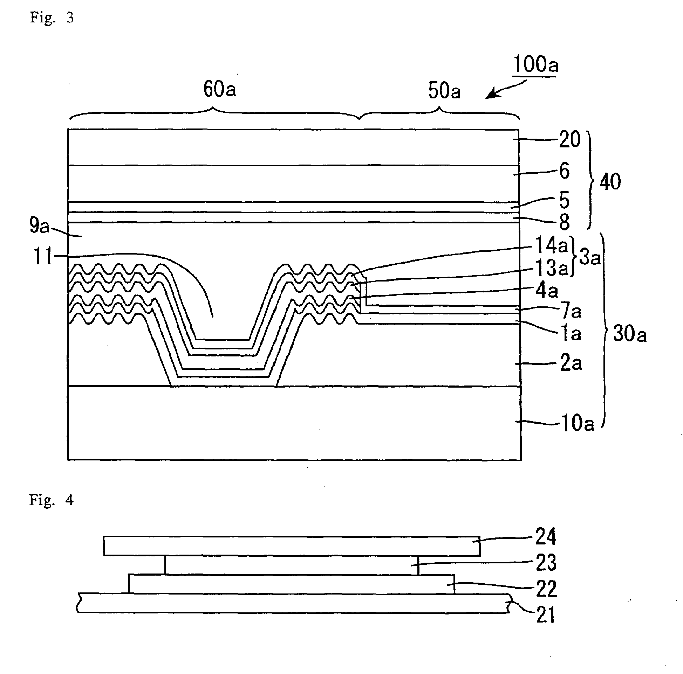

The invention in Patent Document 1 has room for improvement in productivity because the number of production steps is increased due to addition of the patterning steps. It is known that the IZO layer and the Al layer do not need to be patterned with different etching solutions and they are patterned with the same etching solution, such as a mixture of nitric acid, phosphoric acid, acetic acid, and water. However, as shown in Fig. 4, if an A1 film 23 and an IZO film 24 each constituting a multi-layer film are etched collectively, the IZO layer 24, which is above the A1 layer 23 arranged on a Mo layer 22 in a glass substrate 21, might project like a window roof. Such a part as a window roof might be separated to touch a pixel electrode and the like in the substrate, for example, in the successive step where a load is applied to the substrate surface, such as a rubbing step. In such a case, a short circuit between the pixel electrodes is generated, which might reduce a production yield of the substrate on the back face side.

The method in Patent Document 2 has room for improvement in that the number of production steps is increased due to addition of the plasma treatment step and the like. In Patent Documents 3 and 4, the transmissive electrode has the same thickness as that of the transparent conductive film that is formed on the reflective electrode in order to prevent flicker, and the transparent conductive film needs to be thinned in order to suppress the transparent conductive film from absorbing light incident from the outside at the time of reflective display. In such a case, the transmissive electrode in the transmissive region is also thinned, and so defects might be generated in the transmissive electrode, which possibly reduces the production yield. In such a point, the inventions in Patent Documents 3 and 4 have room for improvement.

The present invention has been made in view of the above-mentioned state of the art. The present invention has an object to provide a semi-transmissive liquid crystal display device that can suppress flicker without increasing the number of production steps.

The present inventors made various investigations on a semi-transmissive liquid crystal display device that can suppress flicker without increasing the number of production steps, and they noted a material constituting a surface on a liquid crystal layer side of a reflective electrode. Then, the inventors found the following. If a reflective electrode that is composed of a plurality of layers has a molybdenum-containing surface on the liquid crystal layer side, the plurality of layers constituting the reflective electrode can be collectively patterned, and further, an optimum value of a direct-current offset voltage that is applied to offset a bias electric field generated inside liquid crystal can be made to be almost the same between the transmissive region and the reflective region. That is, the inventors found that flicker can be suppressed without increasing the number of the patterning steps. As a result, the above-mentioned problems have been admirably solved, leading to completion of the present invention.

That is, the present invention is a semi-transmissive liquid crystal display device including: a substrate on a back face side, including a transmissive electrode and a reflective electrode; a substrate on an observation face side, facing the substrate on the back face side; and a liquid crystal layer arranged between the substrate on the back face side and the substrate on the observation face side, wherein the reflective electrode has a molybdenum-containing surface on a side of the liquid crystal layer (hereinafter, also referred to as "the first liquid crystal display device").
The present invention is mentioned in detail below.

The first liquid crystal display device of the present invention is a semi-transmissive liquid crystal display device including: a substrate on a back face side, including a transmissive electrode and a reflective electrode; a substrate on an observation face side, facing the substrate on the back face side; and a liquid crystal layer arranged between the substrate on the back face side and the substrate on the observation face side. The semi-transmissive liquid crystal display device exhibits characteristics of a transmissive liquid crystal display device, for example, exhibits high visibility even in a dark environment because it includes a backlight and further exhibits characteristics of a reflective liquid crystal display device such as a low power-consumption because it uses external light for display. Such a liquid crystal display device is also called a transflective liquid crystal display device.

The above-mentioned reflective electrode has a molybdenum-containing surface on the liquid crystal layer side. The work function (4.6 eV) of molybdenum is close to that (4.7 to 5.2 eV) of ITO (indium tin oxide) and the like, which is commonly used as a material for the transmissive electrode. Thus, the work function of the material for the surface on the liquid crystal layer side of the reflective electrode can be made to be close to that of the material for the transmissive electrode, and so the flicker can be suppressed. Molybdenum can be etched collectively with Al (aluminum) and the like, which is commonly used as a material for the reflective electrode. That is, even if the reflective electrode has a molybdenum-containing surface on the liquid crystal layer side, the layers constituting the reflective electrode can be collectively patterned. So, the flicker can be suppressed without increasing the number of the patterning steps. In addition, the reflective electrode and the transmissive electrode can be formed in different steps, and so, the thickness of the transmissive electrode can be independently optimized. That is, defects are not generated in the transmissive electrode unlike the configuration in which the transmissive electrode is arranged not only in the transmissive region but also on the reflective electrode in order to suppress the flicker. As a result, the production yield can be increased.

At least a part of the surface on the liquid crystal layer side of the above-mentioned reflective electrode may contain molybdenum, and it is preferable that the entire surface on the liquid crystal layer side of the reflective electrode contains molybdenum. The material for the surface on the liquid crystal layer side of the reflective electrode may be elemental molybdenum or may be a molybdenum alloy, or also may be a molybdenum compound as long as it includes a molybdenum atom. In terms of operation and advantages of the present invention, it is preferable that the material is elemental molybdenum and a molybdenum alloy, i.e., a metal containing molybdenum. It is more preferable that the material for the surface on the liquid crystal layer side of the reflective electrode is elemental molybdenum.

The first liquid crystal display device of the present invention is not especially limited, and it may or may not include other components as long as it includes the above-mentioned substrate on the back face side, substrate on the observation face side, and liquid crystal layer as components. The substrate on the back face side is preferably an active matrix substrate in order to improve a contrast ratio and reduce crosstalk, but not especially limited thereto. The substrate on the back face side may be a passive matrix substrate, for example.

Preferable embodiments in the first liquid crystal display device of the present invention are mentioned in detail below.
It is preferable that the reflective electrode has a lower part containing aluminum or silver and an upper part containing molybdenum. The term "upper part" used herein means a part on the liquid crystal layer side of the reflective electrode, and the term "lower part" used herein means a part other than the upper part of the reflective electrode. A reflective region with a high reflectance can be formed because the lower part of the reflective electrode contains aluminum or silver. Further, a flicker voltage between the transmissive region and the reflective region can be reduced because the upper part of the reflective electrode contains molybdenum. The molybdenum film and the aluminum or silver film show substantially the same etching rate for an aqueous solution containing nitric acid, acetic acid, and phosphoric acid (weak acidic etching solution), and the like. So, the upper part of the reflective electrode does not project over its lower part like a window roof, even if the molybdenum film and the aluminum or silver film are collectively etched. As a result, the production yield can be more improved.

It is preferable that the upper part of the reflective electrode has a thickness of 60Å or less. If the upper part has a thickness of more than 60Å, the upper part absorbs incident light used for reflective display before the incident light reaches the lower part of the reflective electrode with a high reflectance. As a result, the reflectance of the reflective region might not be sufficiently obtained. It is preferable that the upper part of the reflective electrode has a thickness not smaller than a diameter (about 3Å) of a molybdenum atom in order to obtain the effect of reducing the flicker voltage between the transmissive region and the reflective region. It is more preferable that the upper part of the reflective electrode has a thickness of 20Å to 40Å in terms of display qualities.

It is preferable that the substrate on the back face side includes a protective conductive layer containing molybdenum on a back face side of the lower part of the reflective electrode. Thus, the protective conductive layer containing molybdenum is arranged, and thereby electric corrosion between the material for the transmissive electrode and the material for the lower part of the reflective electrode can be prevented even if the transmissive electrode is in contact with the lower part of the reflective electrode. Further, the reflective electrode and the protective conductive layer can be patterned collectively if the upper part of the reflective electrode and the protective conductive layer are made of the same material.

The "protective conductive layer" usedhereinmeans a layer that is arranged on the transmissive electrode side of the reflective electrode in order to prevent electrolytic corrosion between the material for the transmissive electrode and the material for the lower part of the reflective electrode if the transmissive electrode is in contact with the lower part of the reflective electrode. For example, it is preferable that the protective conductive layer is made of molybdenum if the lower part of the reflective electrode is made of aluminum and the transmissive electrode is made of indium tin oxide.

It is preferable that the reflective electrode is a single layer containing molybdenum. According to this, a step of forming the reflective electrode can be further simplified because the reflective electrode is a single layer. Even if the transmissive electrode is in contact with the reflective electrode, electric corrosion is not generated and so the protective conductive layer is not needed, unlike the embodiment in which the upper part of the reflective electrode is an ITO layer and the lower part thereof is an Al layer.

It is preferable that the transmissive electrode has a molybdenum-containing surface on a side of the liquid crystal layer. According to this, both of the reflective electrode and the transmissive electrode have a molybdenum-containing surface on their liquid crystal layer side. So, the difference in work function between the transmissive electrode and the reflective electrode can be more reduced. As a result, the flicker can be further suppressed. In order to suppress the flicker, it is preferable that the entire surface on the liquid crystal layer side of the transmissive electrode contains molybdenum. For example, it is preferable that the transmissive electrode has a lower part containing at least one material selected from the group consisting of indium oxide, zinc oxide, tin oxide, indium tin oxide, and indium zinc oxide, and has an upper part containing molybdenum. In addition, in order to maintain a high contrast ratio in transmissive display while the flicker is suppressed, it is preferable that a part of the surface on the liquid crystal side of the transmissive electrode contains molybdenum. For example, an embodiment in which molybdenum residues exist on the surface on the liquid crystal layer side of the transmissive electrode is preferable.

It is preferable that the transmissive electrode contains at least onematerial selected fromthe group consisting of indium oxide, zinc oxide, tin oxide, indium tin oxide, and indium zinc oxide. These materials can be preferably used to reduce a flicker voltage between the transmissive region and the reflective region because each material has a work function close to that of molybdenum. It is more preferable that the transmissive electrode is made of at least one material selected from the group consisting of indium oxide, zinc oxide, tin oxide, indium tin oxide, and indium zinc oxide.

It is preferable that the substrate on the back face side includes an alignment film on the transmissive electrode and the reflective electrode, and a difference in work function between the transmissive electrode and the reflective electrode is 0.1 eV or less, the work function of each of the transmissive electrode and the reflective electrode being measured through the alignment film. The flicker voltage between the transmissive region and the reflective region can be further reduced if the difference in work function between the transmissive electrode and the reflective electrode is 0.1 eV, the transmissive electrode and the reflective electrode being measured for the work function through the alignment film.

The material for the above-mentioned alignment film is not especially limited. Thermoelectron emission, photoelectron emission, electric field electron emission, a Kelvin method (contact potential difference measurement), and the like, are mentioned as a method of measuring the work functions of the transmissive electrode and the reflective electrode. The alignment film forms a capacitance because it is a dielectric substance, and the capacitance has an influence on behavior of an electron on the alignment film. Hence, the Kelvin method (contact potential difference measurement) in which measurement can be performed even under the presence of the alignment film is preferably used. The transmissive electrode and the reflective electrode are measured for work function through the alignment film by the Kelvin method with a measurement instrument (trade name: FAC-2, product of RIKEN KEIKI Co., Ltd.).

The present invention is also a production method of the semi-transmissive liquid crystal display device, including a step of completing patterning of the reflective electrode in a single step. According to this productionmethod, for example, even if the reflective electrode has a multi-layer structure, the patterning of the reflective electrode is completed in a single step, and so the production steps can be simplified. Examples of a method of patterning the reflective electrode include dry etching and wet etching. Wet etching is preferable. It is preferable that the production method of the first liquid crystal display device includes a step of patterning the reflective electrode and the protective conductive layer collectively. According to this, the production steps can be more simplified.

The present invention is a semi-transmissive liquid crystal display device including: a substrate on a back face side, including a transmissive electrode and a reflective electrode; a substrate on an observation face side, facing the substrate on the back face side; and a liquid crystal layer arranged between the substrate on the back face side and the substrate on the observation face side, wherein the reflective electrode has a Group 6 element-containing surface on a side of the liquid crystal layer (hereinafter, also referred to as "the second liquid crystal display device"). According to this semi-transmissive liquid crystal display device, Group 6 elements such as chrome (Cr), molybdenum (Mo), and tungsten (W) each have a work function of 4.5 to 4. 6 eV, and such work functions are close to a work function (4.7 to 5.2 eV) of ITO, which is commonly used as a material for the transmissive electrode. Chrome (Cr), molybdenum (Mo), and tungsten (W) can be etched together with aluminum (Al) and the like, which is commonly used as a material for the reflective electrode. That is, even if the reflective electrode has a multi-layer structure including amolybdenum-containing surface on the liquid crystal layer side, the patterning of the reflective electrode can be completed in a single step. As a result, the flicker can be suppressed without increasing the number of patterning steps.

The second liquid crystal display device of the present invention is not especially limited. The second liquid crystal display device may or may not include other components as long as it includes the above-mentioned substrate on the back face side, substrate on the observation face side, and liquid crystal layer as components. The substrate on the back face side is preferably an active matrix substrate, but not especially limited thereto. The substrate on the back face side may be a passive matrix substrate, for example.

Preferable embodiments of the second liquid crystal display device of the present invention are mentioned below.
It is preferable that the reflective electrode has a lower part containing aluminum or silver and an upper part containing a Group 6 element.
It is preferable the upper part of the reflective electrode has a thickness of 60Å or less.
It is preferable that the substrate on the back face side includes a protective conductive layer containing a Group 6 element on a back face side of the lower part of the reflective electrode.
It is preferable that the reflective electrode is a single layer containing a Group 6 element.
It is preferable that the transmissive electrode has a Group 6 element-containing surface on the liquid crystal layer side.
It is preferable that the transmissive electrode includes at least one material selected fromthe group consisting of indium oxide, zinc oxide, tin oxide, indium tin oxide, and indium zinc oxide.
It is preferable that the substrate on the back face side includes an alignment film on the transmissive electrode and the reflective electrode, a difference in work function between the transmissive electrode and the reflective electrode is 0.1eV or less, the transmissive electrode and the reflective electrode being measured for work function through the alignment film. According to these, the same operation and effects as in the preferable embodiments of the first liquid crystal display device of the present invention can be obtained.

The present invention is also a production method of the second liquid crystal display device, including a step of completing patterning of the reflective electrode in a single step.
According to this production method, the same operation and effects as in the production method of the first liquid crystal display device of the present invention can be obtained.

### EFFECT OF THE INVENTION

According to the semi-transmissive liquid crystal display device of the present invention, the reflective electrode includes a molybdenum-containing surface on the liquid crystal layer side, and so flicker can be suppressed without increasing the number of production steps.

### BEST MODES FOR CARRYING OUT THE INVENTION

The present invention is mentioned in more detail below with reference to Embodiments, using drawings. However, the present invention is not limited to only these Embodiments.

### Embodiment 1

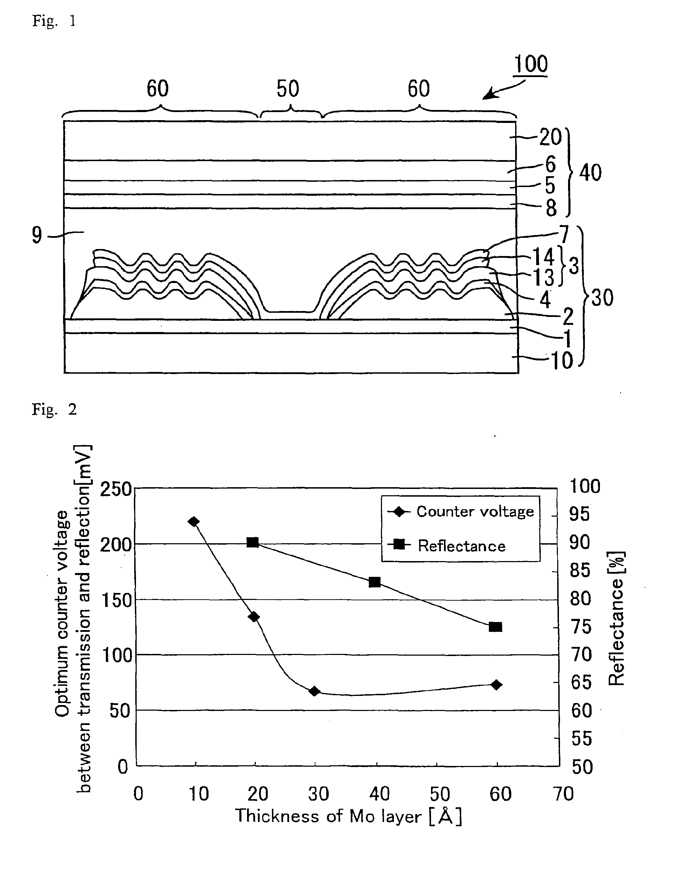

Fig. 1 is a cross-sectional view schematically showing a configuration of an active matrix semi-transmissive liquid crystal display device in accordance with Embodiment 1.
The semi-transmissive liquid crystal display device in accordance with Embodiment 1 includes: a substrate on a back face side 30; a substrate on an observation face side 40 facing the substrate on the back face side 30; and a liquid crystal layer 9 arranged between the substrate on the back face side 30 and the substrate on the observation face side 40, as shown in Fig. 1. According to a semi-transmissive liquid crystal display device 100, a plurality of pixels are arranged in a matrix pattern, each pixel having a transmissive region 50 for transmissive display mode and a reflective region 60 for reflective display mode. Fig. 1 shows a configuration of one pixel.

The substrate on the back face side 30 includes a transmissive electrode 1, an insulating layer for irregularity formation 2, a protective conductive layer 4, a reflective electrode 3, and an alignment film 7 on an active matrix substrate 10. The active matrix substrate 10 has the following structure on an insulating substrate: a plurality of gate signal lines extending in parallel to each other and a plurality of source signal lines extending in parallel to each other are arranged perpendicularly to each other, and at each intersection between the gate signal lines and the source signal lines, a switching element (TFT) is arranged, and an interlayer insulating film is stacked on the switching element. According to the switching element, the gate electrode is connected to the gate signal line and the source electrode is connected to the source signal line.

On the interlayer insulating film in the active matrix substrate 10, the transmissive electrode 1 is formed over both of the transmissive region 50 and the reflective region 60. The transmissive electrode 1 is connected to a drain electrode of the switching element through a contact hole that is formed in the interlayer insulating film constituting the active matrix substrate 10. In the reflective region 60, the insulating layer for irregularity formation 2, the protective conductive layer 4, and the reflective electrode 3 are stacked on the transmissive electrode 1 in this order. The transmissive electrode 1 and the reflective electrode 3 are electrically connected to each other and constitute a pixel electrode.

The transmissive electrode 1 is an ITO (indium tin oxide: a compound of indium oxide with tin oxide) film having a thickness of about 1400Å. A part for transmissive display mode of the pixel electrode is constituted by the transmissive electrode 1. The material for the transmissive electrode 1 is not especially limited to ITO, and it may be IZO (indium zinc oxide), for example.

The insulating layer for irregularity formation 2 is made of a photosensitive acrylic resin, for example. The thickness (about 1. 8 µm) of the insulating layer for irregularity formation 2 is set in such a way that the thickness (about 2 µm) of the liquid crystal layer 9 in the reflective region 60 is about half the thickness (about 4 µm) of the liquid crystal layer in the transmissive region 50, substantially. According to such an embodiment, a phase of light that is outputted fromthe reflective region 60 can be close to a phase of light that is outputted from the transmissive region 50.

The reflective electrode 3 has a multi-layer structure composed of a lower part 13 and an upper part (protective layer) 14. A part for reflective display mode of the pixel electrode is constituted by the reflective electrode 3. The lower part 13 of the reflective electrode 3 is an Al layer having a thickness of about 1000Å, and substantially functions as an electrode for reflecting light that reaches the reflective electrode 3. The upper part 14 of the reflective electrode 3 is a Mo layer having a thickness of about 30Å. The upper part 14 is arranged to suppress flicker that is generated due to a difference in electrical property between ITO for the transmissive electrode 1 and Al for the lower part 13 of the reflective electrode 3.

The protective conductive layer 4 is a Mo layer having a thickness of about 500Å. The protective conductive layer 4 is formed to prevent electrolytic corrosion between ITO for the transmissive electrode 1 and A1 for the lower part 13 of the reflective electrode 3. The alignment film 7 is arranged to control alignment of liquid crystal molecules in the liquid crystal layer 9 in accordance with an applied voltage. The alignment film has a capacitance because it is a dielectric substance, and the capacitance is considered to have an influence on behavior of an electron on the alignment film. The material for the alignment film is not especially limited, and polyimide and the like are mentioned, for example.

The substrate on the observation face side 40 has the following structure on an insulating substrate 20: a color filter layer 6, a blackmatrix (BM), an overcoat layer, a common electrode 5, and an alignment film 8 are stacked in this order. The common electrode 5 is an ITO film having a thickness of about 1000Å, and it is arranged to be common to a plurality of pixels.

The liquid crystal layer 9 is composed of nematic liquid crystals with negative dielectric anisotropy. In the present Embodiment, as shown in Fig. 1, there is a difference in level at a boundary between the reflective region 60 and the transmissive region 50, the difference being mainly attributed to the insulating layer for irregularity formation 2.

A production method of the liquid crystal display device 100 is mentioned below.
The active matrix substrate 10 is produced first, as follows: a gate signal line, a source signal line, a switching element, and the like, are formed on an insulating substrate, and thereon, an interlayer insulating film is formed. Then the transmissive electrode 1 is formed as follows: on the active matrix substrate 10, an ITO (indium tin oxide) film is formed by sputtering, and the ITO film is patterned by photolithography. In the present Embodiment, the transmissive electrode 1 is arranged also in the reflective region 60. The transmissive electrode 1 is not especially limited as long as it can be connected to the reflective electrode 3 and the switching element and it is formed over the entire transmissive region 50. In the present Embodiment, the transmissive electrode 1 has a thickness of about 1400Å.

Then the insulating layer for irregularity formation 2 having an irregular surface is formed as follows: on the transmissive electrode 1, a photosensitive acrylic resin is applied by spin coating to form a film having a thickness of about 1.8 µm, and the entire photosensitive acrylic resin film is half-exposed and provided with depressed parts; and then, only a part corresponding to the transmissive region 50 of the photosensitive acrylic resin film is exposed, developed, and thermally cured. In the present Embodiment, the insulating layer for irregularity formation 2 have irregularities in order to appropriately diffuse light that reaches the reflective electrode 3. However, an insulating layer that is arranged at a position where the insulating layer for irregularity formation 2 is arranged does not need to have irregularities.

Then the protective conductive layer 4 and the reflective electrode 3 are formed as follows. On the entire substrate in which the insulating layer for irregularity formation 2 has been formed, the first Mo film having a thickness of about 500Å, an Al film having a thickness of about 1000Å, and the second Mo film having a thickness of about 30Å are formed by sputtering in this order.

Then, a photoresist is applied by spin coating over the entire substrate and patterned by exposure and development to give a resist pattern; then, using this resist pattern as a mask, the multi-layer film composed of the first Mo film, the Al film, and the second Mo film is etched with an aqueous solution containing nitric acid, acetic acid, and phosphoric acid (weak acidic etching solution). Thus, the first Mo film, the Al film, and the second Mo film can be patterned collectively, and so the number of the patterning steps is not increased. In the present Embodiment, the protective conductive layer 4 is formed between the reflective electrode 3 and the insulating layer for irregularity formation 2. The protective conductive layer 4 is formed at least at a part where the Al film is in contact with the ITO film because the protective conductive layer 4 is formed in order to prevent electrolytic corrosion between the A1 film, which is to constitute the lower part 13 of the reflective electrode 3, and the ITO film, which is to constitute the transmissive electrode 1.

Then the alignment film 7 is formed, and thus, the substrate on the back face side 30 is completed. The substrate on the observation face side 40 is produced by a common technology, and it is attached to the substrate on the back face side 30. Then the liquid crystal layer 9 is formed by liquid crystal injection. As a result, a liquid crystal display panel is produced. Then polarizers are attached to the liquid crystal display panel including the substrate on the back face side of the present Embodiment, and a gate driver, a source driver, a display control circuit, and the like, are mounted on the panel. Thus, the liquid crystal display device 100 is completed.

### Embodiments 2 to 5

Semi-transmissive liquid crystal display devices in Embodiments 2 to 5 each have the same configuration as in Embodiment 1, except that the Mo layer 14 has a thickness of 10Å, 20Å, 40Å, or 60Å.

### Comparative Embodiment 1

A semi-transmissive liquid crystal display device in Comparative Embodiment 1 has the same configuration as in Embodiment 1, except that the protective layer 14 is not arranged.

### Comparison among the semi-transmissive liquid crystal display devices in Embodiments 1 to 5 and Comparative Embodiment 1

The semi-transmissive liquid crystal display devices in Embodiments 1 to 5 and Comparative Embodiment 1 were subjected to the following measurements: reflectance of the reflective region; a difference in work function between the transmissive region and the reflective region; and a flicker voltage between the transmissive region and the reflective region. The reflectance was measured with a spectral colorimetric meter (trade name: CM-2002, product of Konica Minolta Holdings, Inc.).
The transmissive region and the reflective region were measured for work function through the alignment film 7 with a measurement instrument (trade name: FAC-2, product of RIKEN KEIKI Co., Ltd.) by the Kelvin method. The flicker voltage between the transmissive region and the reflective region was also obtained through the measurement with a measurement instrument (trade name: Multimedia Display Tester 3298F, product of Yokogawa Electric Corporation.). The following Table 1 shows the results.

**[Table 1]**

| | Protective layer | | Reflectance (%) | Difference in work function (eV) | Difference in flicker voltage (mV) |
|---|---|---|---|---|---|
| | Material | Thickness (Å) | | | |
| Embodiment 1 | Mo | 30 | 85 | 0.1 | 100 or less |
| Embodiment 2 | Mo | 10 | 92.5 | 0.1 | 200 to 250 |
| Embodiment 3 | Mo | 20 | 89.5 | 0.1 | 100 to 150 |
| Embodiment 4 | Mo | 40 | 82 | 0.1 | 100 or less |
| Embodiment 5 | Mo | 60 | 74.5 | 0.1 | 100 or less |
| Comparative Embodiment 1 | None | | 93 | 0.5 | 400 or more |

In Embodiment 1, molybdenum is used as a material for the protective layer (upper part of the reflective electrode) 14, and the work function (ψ = 4.6 eV) of molybdenum is close to the work function (ψ= 4.7 to 5.2 eV) of ITO for the transmissive electrode 1. So, the flicker voltage can be reduced to 100 mV or less. Further, a high reflectance can be obtained because the protective layer 14 has a thickness of about 30Å. In addition, the patterning of the reflective electrode 3 can be completed in a single step. So, only the molybdenum film-forming step, which is performed for forming the protective layer 14, is increased, compared to the embodiment in which the protective layer 14 is not arranged. As a result, there is no need to perform additional patterning step.

Fig. 2 is a graph showing a relationship between the thickness of the Mo layer (protective layer) 14 and the flicker voltage, and also showing a relationship between the thickness of the Mo layer (protective layer) 14 and the reflectance.
As shown in Fig. 2, the effect of reducing the flicker voltage and the effect of improving the reflectance are in a trade-off relationship. In Embodiments 1 to 5, the both effects can be well-balanced because the Mo layer (protective layer) 14 has a thickness of 3 to 60Å.
In contrast, in Comparative Embodiment 1, the flicker voltage can not be reducedbecause of the absence of the protective layer 14, unlike in Embodiments 1 to 5.

### Embodiment 6

Fig. 3 is a cross-sectional view schematically showing a configuration of an active matrix semi-transmissive liquid crystal display device in accordance with Embodiment 6.
A liquid crystal display device 100a in Embodiment 6 includes a liquid crystal layer 9a between a substrate on a back face side 30a and the substrate on the observation face side 40. In the substrate on the back face side 30a, an insulating layer for irregularity formation 2a is formed on an interlayer insulating film, which is positioned at the top of the active matrix substrate 10a; a transmissive electrode 1a is formed on the insulating layer for irregularity formation 2a; a protective conductive layer 4a and a reflective electrode 3a are formed above the transmissive electrode 1a in a reflective region 60a. A contact hole 11a is formed in the insulating layer for irregularity formation 2a, and through the contact hole 11a, the transmissive electrode 1a is connected to a drain electrode of a TFT element. The insulating layer for irregularity formation 2a is arranged also in a transmissive region 50a, but irregularities are not formed in the transmissive region 50a in order to prevent scattering of light from a backlight. The configuration of the substrate on the observation face side 40 is omitted because it is the same as in Embodiment 1.

A production method of the substrate on the back face side is mentioned below. Methods of forming the transmissive electrode, the protective conductive layer, and the reflective electrode in the present Embodiment are omitted because they are the same as in Embodiment 1.
The insulating layer for irregularity formation 2a is formed on the active matrix substrate 10a in which the interlayer insulating film has been formed. Only a part corresponding to the reflective region 60a other than the transmissive region 50a of the insulating layer for irregularity formation is provided with irregularities. When being provided with the irregularities, the insulating layer for irregularity formation in the reflective region 60a is simultaneously provided with a contact hole 11 for connecting the transmissive electrode 1a to the drain electrode of the TFT element.

An ITO film, which is to be the transmissive electrode 1a, a Mo film, which is to be the protective conductive layer 4a, and an Al film and a Mo film, each of which is to be the reflective film 3a, are formed in this order. Then the Mo film, which is to be the protective conductive layer 4a, the A1 film and the Mo film, each of which is to be the reflective electrode 3a, are collectively etched in the same manner as in Embodiment 1. As a result, a lower part 13a and an upper part 14a of the reflective electrode are formed. After that, an alignment film 7a is formed. In the above-mentioned manner, the substrate on the back face side 30a is completed.

In the substrate on the back face side 30a, which has been prepared in the production method in Embodiment 6, the TFT element is connected to the transmissive electrode 1a through the contact hole 11. In this case, the three layers: the transmissive electrode 1a; the lower part 13a of the reflective electrode 3a; and the upper part 14a of the reflective electrode 3a are formed. So, disconnection due to the difference in level on the layer surface such as the difference attributed to the contact hole 11 and the like, is less generated, and the reflective electrode 3a can be more surely connected to the transmissive electrode 1a. As a result, the production yield can be improved.

The present application claims priority to Patent Application No. 2007-067036 filed in Japan on March 15, 2007 under the Paris Convention and provisions of national law in a designated State, the entire contents of which are hereby incorporated by reference.

### BRIEF DESCRIPTION OF DRAWINGS

[Fig. 1] Fig. 1 is a cross-sectional view schematically showing a configuration of the semi-transmissive liquid crystal display device in accordance with Embodiment 1.
[Fig. 2]
   Fig. 2 is a graph showing a relationship between the thickness of the Mo layer (upper part of the reflective electrode) and the flicker voltage and also showing a relationship between the thickness of the Mo layer (upper part of the reflective electrode) and the reflectance.
[Fig. 3]
   Fig. 3 is a cross-sectional view schematically showing a configuration of the semi-transmissive liquid crystal display device in accordance with Embodiment 6.
[Fig. 4]
   Fig. 4 is a cross-sectional view schematically showing the shape of the multi-layer film composed of the IZO layer, the Al layer, and the Mo layer, which has been collectively etched.

### EXPLANATION OF NUMERALS AND SYMBOLS

1, 1a: Transmissive electrode
2, 2a: Insulating layer for irregularity formation
3, 3a: Reflective electrode
4, 4a: Protective conductive layer
5: Common electrode
6: Color filter layer
7, 7a, 8: Alignment film
9, 9a: Liquid crystal layer
10, 10a: Active matrix substrate
11: Contact hole
13, 13a: Lower part of reflective electrode
14, 14a: Upper part of reflective electrode (protective layer)
20: Insulating substrate
21: Glass substrate
22: Mo layer
23: Al layer
24: IZO layer
30, 30a: Substrate on the back face side
40: Substrate on the observation face side
50, 50a: Transmissive region
60, 60a: Reflective region
100, 100a: Liquid crystal display device

## Claims

1. A semi-transmissive liquid crystal display device comprising:
a substrate on a back face side, including a transmissive electrode and a reflective electrode;
a substrate on an observation face side, facing the substrate on the back face side; and
a liquid crystal layer arranged between the substrate on the back face side and the substrate on the observation face side,
wherein the reflective electrode has a molybdenum-containing surface on a side of the liquid crystal layer.

2. The semi-transmissive liquid crystal display device according to Claim 1,
wherein the reflective electrode has a lower part containing aluminum or silver and an upper part containing molybdenum.

3. The semi-transmissive liquid crystal display device according to Claim 2,
wherein the upper part of the reflective electrode has a thickness of 60Å or less.

4. The semi-transmissive liquid crystal display device according to Claim 2,
wherein the substrate on the back face side includes a protective conductive layer containing molybdenum on a back face side of the lower part of the reflective electrode.

5. The semi-transmissive liquid crystal display device according to Claim 1,
wherein the reflective electrode is a single layer containing molybdenum.

6. The semi-transmissive liquid crystal display device according to Clam 1,
wherein the transmissive electrode has a molybdenum-containing surface on a side of the liquid crystal layer.

7. The semi-transmissive liquid crystal display device according to Claim 1,
wherein the transmissive electrode contains at least one material selected from the group consisting of indium oxide, zinc oxide, tin oxide, indium tin oxide, and indium zinc oxide.

8. The semi-transmissive liquid crystal display device according to Claim 1,
wherein the substrate on the back face side includes an alignment film on the transmissive electrode and the reflective electrode, and
a difference in work function between the transmissive electrode and the reflective electrode is 0.1 eV or less,
the work function of each of the transmissive electrode and the reflective electrode being measured through the alignment film.

9. A production method of the semi-transmissive liquid crystal display device according to Claim 1,
comprising a step of completing patterning of the reflective electrode in a single step.

10. A semi-transmissive liquid crystal display device comprising:
a substrate on a back face side, including a transmissive electrode and a reflective electrode;
a substrate on an observation face side, facing the substrate on the back face side; and
a liquid crystal layer arranged between the substrate on the back face side and the substrate on the observation face side,
wherein the reflective electrode has a Group 6 element-containing surface on a side of the liquid crystal layer.
